# EUROPÄISCHE PATENTSCHRIFT

(11) **EP 3 287 259 B1**
(45) Veröffentlichungstag und Bekanntmachung des Hinweises auf die Patenterteilung: **14.07.2021**
(21) Anmeldenummer: 17172835.5
(22) Anmeldetag: 24.05.2017
(51) Int. Cl.: B22F 3/105, B33Y 30/00, B29C 64/214, B29C 64/232, B29C 64/236, B29C 64/321, B29C 64/153

(54) **VORRICHTUNG ZUR ADDITIVEN HERSTELLUNG WENIGSTENS EINES DREIDIMENSIONALEN OBJEKTS**
APPARATUS FOR ADDITIVE MANUFACTURING OF AT LEAST ONE THREE-DIMENSIONAL OBJECT
DISPOSITIF DE FABRICATION ADDITIVE D'AU MOINS UN OBJET TRIDIMENSIONNEL

(30) Priorität: 23.08.2016 DE 102016115575
(43) Veröffentlichungstag der Anmeldung: 28.02.2018
(73) Patentinhaber: CL Schutzrechtsverwaltungs GmbH, 96215 Lichtenfels (DE)
(72) Erfinder: HERZOG, Frank, 96215 Lichtenfels (DE); DR. BECHMANN, Florian, 96215 Lichtenfels (DE); ZEULNER, Fabian, 96215 Lichtenfels (DE); Diller, Christian, 96215 Lichtenfels (DE); Döhler, Tim, 96269 Großheirath (DE); Stammberger, Jens, 96472 Rödental (DE)
(74) Vertreter: Hafner & Kohl PartmbB

(56) Entgegenhaltungen:
- WO-A1-2015/167335
- DE-A1- 4 400 523
- DE-A1-102005 016 940
- DE-A1-102014 112 450
- DE-B3-102006 053 121

## Beschreibung

Die Erfindung betrifft eine Vorrichtung zur additiven Herstellung wenigstens eines dreidimensionalen Objekts durch sukzessive selektive Verfestigung einzelner Baumaterialschichten aus verfestigbarem partikulären Baumaterial vermittels eines von einer Strahlungserzeugungseinrichtung erzeugten Energiestrahls. Die Vorrichtung umfasst u. a. wenigstens eine Strahlungserzeugungseinrichtung zur Erzeugung eines Energiestrahls und wenigstens eine Beschichtereinrichtung zur Ausbildung einer zu verfestigenden Baumaterialschicht in einer Bauebene.

Derartige Vorrichtungen sind zur additiven Herstellung dreidimensionaler Objekte an und für sich bekannt. Vermittels entsprechenden Vorrichtungen werden herzustellende dreidimensionale Objekte durch selektives Verfestigen von in einer Bauebene aufgebrachten Baumaterialschichten aus verfestigbarem partikulären Baumaterials in jeweiligen Querschnittsbereichen der jeweils herzustellenden Objekte entsprechenden Bereichen vermittels eines von einer Strahlungserzeugungseinrichtung erzeugten Energiestrahls sukzessive additiv aufgebaut.

Die Aufzugs- bzw. Beschichtungseigenschaften des Baumaterials stellen ein wesentliches Kriterium für die Güte der vermittels der Beschichtereinrichtung auszubildenden Baumaterialschichten dar. Die Aufzugs- bzw. Beschichtungseigenschaften des Baumaterials werden insbesondere durch chemischphysikalische Wechselwirkungen, d. h. z. B. Van-der-Waals-Kräfte, aus der Anlagerung von Feuchtigkeit resultierende Wasserstoffbrückenbindungen, etc., zwischen den Baumaterialpartikeln bestimmt. Bisherige Ansätze zur Optimierung der Aufzugs- bzw. Beschichtungseigenschaften des Baumaterials basieren u. a. auf einer vergleichsweise aufwändigen materialmäßigen Beeinflussung des Baumaterials, z. B. durch eine Auswahl der Partikelmorphologie und/oder der Partikelzusammensetzung.

DE 10 2005 016 940 A1 offenbart eine Vorrichtung zum Auftragen von Schichten eines pulverförmigen Materials mit einem Beschichter), der zum Auftragen einer Materialschicht zwischen zwei Endpositionen hin- und her bewegbar ist und eine Klinge zum Abtragen von überschüssigem Material beim Erzeugen einer Materialschicht aufweist.

DE 10 2014 112 450 A1 offenbart eine Beschichteranordnung für einen 3D-Drucker.

DE 44 00 523 A1 offenbart ein Verfahren zum Herstellen eines dreidimensionalen Objekts, bei dem das Objekt schichtweise dadurch erzeugt wird, daß jeweils eine Schicht aus durch Bestrahlen mit elektromagnetischer Strahlung verfestigbarem Material aufgetragen und anschließend an den dem Objekt entsprechenden Stellen durch Bestrahlen verfestigt wird.

WO 2015/167335 A1 offenbart ein Verfahren zum additiven Herstellen eines dreidimensionalen Objekts.

Der Erfindung liegt die Aufgabe zugrunde, eine demgegenüber, insbesondere im Hinblick auf eine Verbesserung der Aufzugs- bzw. Beschichtungseigenschaften des Baumaterials, verbesserte Vorrichtung zur additiven Herstellung eines dreidimensionalen Objekts anzugeben.

Die Aufgabe wird durch eine Vorrichtung gemäß Anspruch 1 gelöst. Die abhängigen Ansprüche betreffen besondere Ausführungsformen der Vorrichtung. Die Aufgabe wird ferner durch ein Verfahren gemäß Anspruch 15 gelöst.

Die hierin beschriebene Vorrichtung dient im Allgemeinen der additiven bzw. generativen Herstellung wenigstens eines dreidimensionalen Objekts, d. h. typischerweise eines technischen Bauteils bzw. einer technischen Bauteilgruppe, durch sukzessive selektive schichtweise Verfestigung einzelner Baumaterialschichten aus einem verfestigbaren partikulären bzw. pulverförmigen Baumaterial vermittels wenigstens eines von wenigstens einer Strahlungserzeugungseinrichtung erzeugten Energiestrahls. Bei der Vorrichtung kann es sich insbesondere um eine Vorrichtung zur Durchführung additiver Laserschmelzverfahren, kurz um eine SLM-Vorrichtung handeln. Die sukzessive selektive schichtweise Verfestigung der zu verfestigenden Baumaterialschichten erfolgt auf Grundlage von Baudaten. Die Baudaten beschreiben im Allgemeinen die geometrische bzw. geometrisch-konstruktive Gestalt des jeweils additiv herzustellenden dreidimensionalen Objekts (im Weiteren abgekürzt als "Objekt" bezeichnet). Die Baudaten können beispielsweise CAD-Daten des herzustellenden Objekts sein bzw. auf Grundlage solcher erstellt sein.

Die Vorrichtung umfasst die typischen erforderlichen Funktionskomponenten zur Durchführung additiver Bauprozesse, d. h. insbesondere eine Strahlungserzeugungseinrichtung zur Erzeugung eines Energiestrahls, insbesondere eines Laser- oder Elektronenstrahls, zur selektiven Verfestigung jeweiliger Baumaterialschichten aus einem partikulären Baumaterial, insbesondere einem Metall-, Kunststoff- oder Keramikpulver, und eine Beschichtereinrichtung zur Ausbildung zu verfestigender Baumaterialschichten in einer Bauebene. Bei einer Bauebene kann es sich um eine Oberfläche eines, typischerweise (in vertikaler Richtung) bewegbar gelagerten, Tragelements einer Trageinrichtung oder eine bereits verfestigte Baumaterialschicht handeln.

Das Tragelement bzw. die Trageinrichtung stellt typischerweise eine bodenseitige Begrenzung eines Pulverkammervolumens eines Pulvermoduls dar. Das Pulvermodul ist zur Aufnahme und/oder Abgabe von Baumaterial eingerichtet. Jedes Pulvermodul umfasst eine Pulverkammer zur Aufnahme von im Rahmen eines additiven Bauvorgangs selektiv zu verfestigendem Baumaterial oder von im Rahmen eines additiven Bauvorgangs nicht verfestigtem Baumaterial. Die Pulverkammer begrenzt ein mit Baumaterial befüllbares Pulverkammervolumen. Das Pulverkammervolumen ist zumindest seitlich durch Wandungen (Pulverkammerwandungen) der in der Regel hohlquaderartig bzw. hohlzylinderartig ausgebildeten Pulverkammer begrenzt. Bodenseitig ist das Pulverkammervolumen, wie erwähnt, durch die Trageinrichtung begrenzt. Bei dem Pulvermodul kann es sich z. B. um ein Baumodul, in welchem der eigentliche additive Aufbau dreidimensionaler Objekte erfolgt und welches hierfür im Rahmen der Durchführung additiver Herstellungsprozesse sukzessive schichtweise mit selektiv zu verfestigendem Baumaterial befüllt wird, um ein Dosiermodul, über welches im Rahmen der Durchführung additiver Herstellungsprozesse sukzessive schichtweise Baumaterial in eine Prozesskammer dosiert wird, oder um ein Auffangmodul, welches im Rahmen der Durchführung additiver Herstellungsprozesse mit nicht verfestigtem Baumaterial befüllt wird, handeln.

Die Vorrichtung umfasst ferner wenigstens eine Fluidisierungseinrichtung. Die Fluidisierungseinrichtung ist zur zumindest abschnittsweisen Fluidisierung des in einer selektiv zu verfestigenden Baumaterialschicht aufbringbaren Baumaterials bzw. des (bereits) in einer selektiv zu verfestigenden Baumaterialschicht aufgebrachten Baumaterials eingerichtet. Unter einer Fluidisierung ist - ähnlich dem Wirbelschichtverfahren - insbesondere eine (lokale bzw. lokal begrenzte) Verwirbelung des Baumaterials bzw. der Baumaterialpartikel zu verstehen, welche dem Baumaterial fluid-ähnliche Eigenschaften verleiht; das Baumaterial bzw. eine jeweilige Baumaterialschicht kann also zumindest abschnittsweise in eine Art Wirbelschicht verwandelt werden. Die Verwirbelung des Baumaterials wirkt sich - (weitgehend) unabhängig von der materialmäßigen Zusammensetzung des Baumaterials - positiv auf die Aufzugs- bzw. Beschichtungseigenschaften respektive das Aufzugs- bzw. Beschichtungsverhalten des Baumaterials aus. Dies begründet sich dadurch, dass die Fluidisierung eine Aufhebung bzw. Schwächung der im Zusammenhang mit dem eingangs genannten Stand der Technik beschriebenen chemisch-physikalischen Wechselwirkungen der Baumaterialpartikel bedingt, welche insbesondere auf einer aus der Fluidisierung resultierenden Veränderung der Kontaktstellen der Baumaterialpartikel basiert. Die Fluidisierung des Baumaterials kann eine (zeitweise) Aufhebung bzw. Schwächung der auf die Baumaterialpartikel einwirkenden Gravitationskräfte bedingen. Die Fluidisierung des Baumaterials erfolgt (zeitlich) vor der selektiven Verfestigung des Baumaterials.

Mithin liegt eine, insbesondere im Hinblick auf eine Verbesserung der Aufzugs- bzw. Beschichtungseigenschaften des Baumaterials, verbesserte Vorrichtung zur additiven Herstellung eines dreidimensionalen Objekts vor.

In einer ersten Ausführungsform ist die Fluidisierungseinrichtung eingerichtet, eine eine zumindest abschnittsweise Fluidisierung des als selektiv zu verfestigende Baumaterialschicht aufbringbaren Baumaterials und/oder des als selektiv zu verfestigende Baumaterialschicht aufgebrachten Baumaterials herbeiführende Gasströmung zu erzeugen. Die Fluidisierung des Baumaterials bzw. der Baumaterialschicht erfolgt hier durch eine seitens der Fluidisierungseinrichtung erzeugte Gasströmung. Die Gasströmung ist sich parallel zu der Bauebene erstreckend ausgerichtet.

Die Gasströmung ist im Hinblick auf ihre Strömungseigenschaften, d. h. insbesondere Strömungsart, wobei eine (möglichst) laminare Gasströmung bevorzugt ist, und Strömungsgeschwindigkeit, wobei eine (möglichst) geringe Strömungsgeschwindigkeit bevorzugt ist, so gewählt, dass diese eine bereits gebildete Baumaterialschicht nicht beeinträchtigt. Die durch die Gasströmung erzeugte Verwirbelung bedingt typischerweise eine lokale bzw. lokal begrenzte Verwirbelung des Baumaterials bzw. der Baumaterialschicht.

Die Gasströmung ist typischerweise durch ein inertes Strömungsgas (Inertgas) oder durch eine inerte Strömungsgasmischung gebildet. Das Strömungsgas bzw. die Strömungsgasmischung steht sonach in keiner reaktiven Wechselwirkung mit dem Baumaterial. Das Strömungsgas kann z. B. Argon oder Stickstoff sein. Die Strömungsgasmischung kann z. B. Argon oder Stickstoff beinhalten.

Die Gasströmung kann über eine oder mehrere in einer Funktionskomponente der Beschichtereinrichtung ausgebildete, insbesondere diffusor- oder düsenartige, Strömungsöffnung(en) in das Baumaterial einbringbar sein. Bei der Funktionskomponente handelt es sich insbesondere um ein klingenartiges bzw. - förmiges Beschichterelement (Beschichterklinge). Die Funktionskomponente kann mit einer Strömungserzeugungseinrichtung gekoppelt sein, über welche die Gasströmung in die Funktionskomponente einbringbar bzw. einleitbar ist. Die Strömungsöffnungen können so angeordnet und ausgerichtet sein, dass die Gasströmung, zumindest ihrer Hauptströmungsrichtung nach, (weitgehend) parallel zu der Bauebene strömt. Sofern mehrere Strömungsöffnungen vorhanden sind, können diese, gegebenenfalls gruppenweise, in reihen- und/oder spaltenartiger Anordnung, mithin neben- oder übereinander, angeordnet sein. Wenigstens eine Strömungsöffnung kann mit einer die Strömungseigenschaften beeinflussenden, d. h. insbesondere verlangsamenden und/oder homogenisierenden, Geometrie, d. h. z. B. einer gitterartigen bzw. -förmigen Diffusor- bzw. Düsengeometrie, ausgebildet sein.

Zur Beeinflussung, d. h. insbesondere zur Verlangsamung bzw. Homogenisierung der Strömungseigenschaften der Gasströmung, kann selbstverständlich auch wenigstens ein gesondertes, wenigstens einer Strömungsöffnung funktionell zugeordnetes Diffusorelement vorhanden sein. Das Diffusorelement kann der wenigstens einen Strömungsöffnung vor- oder nachgeschaltet sein.

In einer weiteren Ausführungsform kann die oder wenigstens eine Fluidisierungseinrichtung eingerichtet sein, eine zumindest abschnittsweise Fluidisierung des als eine selektiv zu verfestigende Baumaterialschicht aufbringbaren Baumaterials und/oder des als selektiv zu verfestigende Baumaterialschicht aufgebrachten Baumaterials herbeiführende mechanische Schwingungen zu erzeugen. Die Fluidisierung des Baumaterials bzw. der Baumaterialschicht erfolgt hier durch seitens der Fluidisierungseinrichtung erzeugte mechanische Schwingungen (Vibrationen). Die erzeugten Schwingungen sind im Hinblick auf ihre Schwingungseigenschaften, d. h. insbesondere Amplitude und Frequenz, so gewählt, dass diese eine bereits gebildete Baumaterialschicht nicht beeinträchtigen. Die durch die mechanischen Schwingungen erzeugte Verwirbelung bedingt typischerweise eine lokale bzw. lokal begrenzte Verwirbelung des Baumaterials bzw. der Baumaterialschicht.

Bei den mechanischen Schwingungen kann es sich insbesondere um akustische Schwingungen, d. h. um Schall, insbesondere um Ultraschall, handeln. Die mechanischen Schwingungen können verschiedenartig sein; es kann sich dabei beispielsweise um periodische oder aperiodische bzw. um lineare oder nicht lineare mechanische Schwingungen handeln. Die Eigenschaften, d. h. Art, Form, Amplitude, Frequenz, etc., der zur Fluidisierung einer Baumaterialschicht konkret einzusetzenden bzw. eingesetzten mechanischen Schwingungen sind insbesondere in Abhängigkeit verschiedener Baumaterialparameter, d. h. insbesondere Verdichtungsgrad, Partikelart(verteilung), Partikelform(verteilung), Partikelgröße(nverteilung), etc., der Baumaterialschicht und/oder Prozessparameter festzulegen. Elne mechanische Schwingung kann sich aus mehreren einander überlagerten bzw. miteinander kombinierten Einzelschwingungen zusammensetzen, sodass sich ein aus der Überlagerung bzw. Kombination der Einzelschwingungen resultierendes Schwingungsspektrum ergibt.

Die mechanischen Schwingungen können über wenigstens ein an oder in einer Funktionskomponente der Beschichtereinrichtung angeordnetes oder ausgebildetes Schwingungserzeugungselement in das Baumaterial einbringbar sein. Die mechanischen Schwingungen zur Fluidisierung des Baumaterials bzw. einer Baumaterialschicht können also unmittelbar über ein entsprechendes Beschichterelement in eine Baumaterialschicht eingebracht werden. Das Schwingungserzeugungselement bzw. die Funktionskomponente kann mit einer Schwingungserzeugungseinrichtung gekoppelt sein, über welche entsprechende Schwingungen in das Schwingungserzeugungselement bzw. in die Funktionskomponente einbringbar sind. Bei der Funktionskomponente handelt es sich wiederum insbesondere um ein klingenartiges bzw. -förmiges Beschichterelement (Beschichterklinge). Denkbar ist es auch, dass ein Schwingungserzeugungselement in das Beschichterelement integriert ist. Bei dem Schwingungserzeugungselement kann es sich um ein piezoelektrisches Element, d. h. im Allgemeinen um ein akustomechanisches Wandlerelement, handeln bzw. kann dieses ein solches umfassen.

Neben der Fluidisierungseinrichtung, welche, wie erläutert, der Verbesserung der Aufzugs- bzw. Beschichtungseigenschaften des Baumaterials dient, kann die Vorrichtung zusätzlich eine Schwingungseinrichtung umfassen, welche der Verdichtung der Baumaterialschicht dient. Die Schwingungseinrichtung ist entsprechend eingerichtet, zur zumindest abschnittsweisen Verdichtung einer Baumaterialschicht zumindest bereichsweise mechanische Schwingungen in die Baumaterialschicht einzubringen. Die über die insofern als auch Verdichtungseinrichtung zu bezeichnende bzw. zu erachtende Schwingungseinrichtung in die Baumaterialschicht eingebrachten mechanischen Schwingungen resultieren in einer zumindest abschnittsweisen (gegebenenfalls weiteren) Verdichtung der Baumaterialschicht. Die Verdichtung der Baumaterialschicht beruht auf einer zumindest abschnittsweisen mechanischen Anregung des Baumaterials durch die in die Baumaterialschicht eingebrachten mechanischen Schwingungen. Diese ermöglicht das Ausfüllen bestehender "Leerstellen" in der Mikro- bzw. Makrogefügestruktur der Baumaterialschicht und bedingt so eine dichtere Anordnung von Baumaterialpartikeln aneinander, was in einer im Vergleich dichteren Packung der Baumaterialschicht bzw. in einer Verdichtung des Gefüges der Baumaterialschicht resultiert. Die durch die mechanischen Schwingungen induzierte Neuanordnung bzw. Neuausrichtung von Baumaterialpartikeln hat direkten Einfluss auf die Mikro- bzw. Makrogefügestruktur der Baumaterialschicht. Unter mechanischen Schwingungen sind wiederum insbesondere akustische Schwingungen, d. h. Schall, zu verstehen. Die Verdichtung kann gleichzeitig mit der oder nach der Fluidisierung erfolgen.

Die der Verdichtung der Baumaterialschicht dienenden mechanischen Schwingungen können verschiedenartig sein; es kann sich auch hier beispielsweise um periodische oder aperiodische bzw. um lineare oder nicht lineare mechanische Schwingungen handeln. Die Eigenschaften, d. h. Art, Form, Amplitude, Frequenz, etc., der zur Verdichtung einer Baumaterialschicht konkret einzusetzenden bzw. eingesetzten mechanischen Schwingungen sind auch hier insbesondere in Abhängigkeit verschiedener Baumaterialparameter, d. h. insbesondere Verdichtungsgrad, Partikelart(verteilung), Partikelform(verteilung), Partikelgröße(nverteilung), etc., der Baumaterialschicht und/oder Prozessparameter festzulegen. Selbstverständlich kann sich eine mechanische Schwingung auch hier aus mehreren einander überlagerten bzw. miteinander kombinierten Einzelschwingungen zusammensetzen, sodass sich ein aus der Überlagerung bzw. Kombination der Einzelschwingungen resultierendes Schwingungsspektrum ergibt. Die Frequenz der mechanischen Schwingungen liegt typischerweise in einem Bereich zwischen 10 Hz und 100 kHz, insbesondere in einem Bereich zwischen 50 Hz und 100 kHz. Selbstverständlich sind Ausnahmen nach oben und/oder unten denkbar, da die Frequenz als wesentliche Eigenschaft periodischer mechanischer Schwingungen in Abhängigkeit verschiedener Paramater, z. B. der Baumaterialschicht, festzulegen ist. Grundsätzlich gilt, dass sich die mechanischen Schwingungen zur Verdichtung des Baumaterials typischerweise von den mechanischen Schwingungen zur Fluidisierung des Baumaterials unterscheiden bzw. unterscheiden können.

Zur Erzeugung und Übertragung mechanischer Schwingungen umfasst die Schwingungseinrichtung typischerweise wenigstens ein Schwingungserzeugungselement zur Erzeugung mechanischer Schwingungen mit wenigstens einer bestimmten Schwingungscharakteristik bzw. bestimmten Schwingungseigenschaften und wenigstens ein Schwingungsübertragungselement zur Übertragung erzeugter mechanischer Schwingungen an bzw. in eine Baumaterialschicht oder ein Übertragungsmedium. Die mechanischen Schwingungen können sonach über ein der Schwingungseinrichtung zugehöriges Schwingungserzeugungselement, d. h. z. B. ein Generator- bzw. Wandlerelement, erzeugt und über ein diesem nachgeschaltetes Schwingungsübertragungselement, d. h. z. B. ein Membranelement, in eine Baumaterialschicht oder ein Übertragungsmedium, d. h. z. B. ein Inertgas oder Luft zwischen dem Übertragungselement und der Baumaterialschicht, übertragen werden. Ein Schwingungserzeugungselement kann konkret z. B. als ein elektromechanisches, insbesondere akustisches oder piezoelektrisches, Wandlerelement ausgebildet sein oder wenigstens ein solches umfassen.

Die Schwingungseinrichtung bzw. ein dieser zugehöriges Schwingungsübertragungselement kann eine zu verdichtende Baumaterialschicht zumindest während der Einbringung mechanischer Schwingungen in die Baumaterialschicht zumindest bereichsweise kontaktieren, sodass erzeugte mechanische Schwingungen unmittelbar über das Schwingungsübertragungselement in die Baumaterialschicht einbringbar sind. Mechanische Schwingungen können sonach rein mechanisch in eine Baumaterialschicht eingebracht werden.

Selbstverständlich ist es auch denkbar, dass die Schwingungseinrichtung bzw. ein dieser zugehöriges Schwingungsübertragungselement eine Baumaterialschicht zumindest während der Einbringung mechanischer Schwingungen in die Baumaterialschicht nicht kontaktiert, sodass erzeugte mechanischen Schwingungen mittelbar über ein Übertragungsmedium, wie erwähnt z. B. ein Inertgas, in die Baumaterialschicht einbringbar sind. Mechanische Schwingungen können sonach (auch) rein akustisch bzw. kontaktfrei in eine Baumaterialschicht eingebracht werden.

Die Schwingungseinrichtung bzw. das Schwingungsübertragungselement kann mit der typischerweise zumindest entlang einer Bauebene bewegbar gelagerten Beschichtereinrichtung bewegungsgekoppelt sein. Die Bewegungskopplung zwischen der Schwingungseinrichtung bzw. dem Schwingungsübertragungselement und der Beschichtereinrichtung kann dadurch realisiert sein, dass diese(s) an bzw. in der Beschichtereinrichtung angeordnet oder ausgebildet ist. Hierdurch ist gleichermaßen eine sehr kompakte Anordnung bzw. Integration der Schwingungseinrichtung bzw. des Schwingungsübertragungselements in der bzw. in die Vorrichtung gegeben. Die bewegbare Lagerung der Beschichtereinrichtung kann z. B. über eine Führungseinrichtung, insbesondere einer Linearführungseinrichtung, bzw. eine Kopplung der Beschichtereinrichtung mit einer Führungseinrichtung, insbesondere einer Linearführungseinrichtung, realisiert sein, vermittels welcher die Beschichtereinrichtung zur Ausbildung einer Baumaterialschicht in einer Bauebene zumindest entlang der Bauebene in einer Bau- bzw. Prozesskammer der Vorrichtung bewegbar ist.

Die Schwingungseinrichtung kann in einem der Beschichtereinrichtung zugehörigen, insbesondere klingenförmigen, Beschichterelement oder parallel zu einem solchen angeordnet sein. Dabei ist es denkbar, dass ein der Beschichtereinrichtung zugehöriges, insbesondere klingenförmiges, Beschichterelement selbst als Schwingungsübertragungselement ausgebildet ist bzw. als solches dient. Mechanische Schwingungen zur Verdichtung der Baumaterialschicht können sonach unmittelbar über ein entsprechendes Beschichterelement in eine Baumaterialschicht eingebracht werden. Das Beschichterelement wird hierzu durch entsprechende mechanische Schwingungen in mechanische Anregungen versetzt. Die Einbringung mechanischer Schwingungen in die Baumaterialschicht erfolgt über das entsprechend angeregte Beschichterelement.

Alternativ zu der Anordnung oder Ausbildung der Schwingungseinrichtung bzw. eines Schwingungserzeugungselements an oder in der Beschichtereinrichtung ist es auch denkbar, dass die Schwingungseinrichtung, insbesondere ein dieser zugehöriges Schwingungsübertragungselement zur Übertragung erzeugter mechanischer Schwingungen, mit einer in wenigstens einem Bewegungsfreiheitsgrad, insbesondere zumindest entlang einer Bauebene, bewegbar gelagerten gesonderten Halteeinrichtung bewegungsgekoppelt, d. h. insbesondere an bzw. in der Halteeinrichtung angeordnet oder ausgebildet, ist. Die bewegbar gelagerte Halteeinrichtung kann der Beschichtereinrichtung während der Ausbildung einer entsprechenden Baumaterialschicht nachgeführt werden, sodass sich ähnliche oder gleiche Bewegungsbahnen, insbesondere entlang einer Bauebene, ergeben. Die bewegbare Lagerung der Halteeinrichtung kann z. B. über eine Führungseinrichtung, insbesondere eine Linearführungseinrichtung, bzw. eine Kopplung der Halteeinrichtung mit einer Führungseinrichtung, insbesondere einer Linearführungseinrichtung, realisiert sein, vermittels welcher die Halteeinrichtung in wenigstens einem Bewegungsfreiheitsgrad, insbesondere entlang einer Bauebene, in einer Bau- oder Prozesskammer der Vorrichtung bewegbar ist.

Alternativ zu der Anordnung oder Ausbildung der Schwingungseinrichtung bzw. eines Schwingungserzeugungselements an oder in der Beschichtereinrichtung bzw. einer entsprechenden Halteinrichtung ist es auch denkbar, dass die Schwingungseinrichtung, insbesondere ein dieser zugehöriges Schwingungsübertragungselement zur Übertragung erzeugter mechanischer Schwingungen, an oder in einem Pulvermodul anzuordnen oder auszubilden. Konkret kann die Schwingungseinrichtung bzw. ein Schwingungserzeugungselement in einer Pulverkammerwandung oder in einer Trageinrichtung angeordnet oder ausgebildet sein.

Die Erfindung betrifft neben der Vorrichtung auch ein Verfahren zur additiven Herstellung eines dreidimensionalen Objekts durch sukzessive selektive schichtweise Verfestigung einzelner Baumaterialschichten aus verfestigbarem partikulären Baumaterial vermittels eines von einer Strahlungserzeugungseinrichtung erzeugten Energiestrahls. Das Verfahren zeichnet sich dadurch aus, dass das als selektiv zu verfestigende Baumaterialschicht aufbringbare Baumaterial und/oder das als selektiv zu verfestigende Baumaterialschicht aufgebrachte Baumaterial vermittels einer Fluidisierungseinrichtung zumindest abschnittsweise fluidisiert wird. Sämtliche Ausführungen im Zusammenhang mit der vorstehend beschriebenen Vorrichtung gelten demnach analog für das Verfahren.

Die Erfindung ist anhand von Ausführungsbeispielen in den Zeichnungsfiguren näher erläutert. Dabei zeigen:
- Fig. 1: eine Prinzipdarstellung einer Vorrichtung zur additiven Herstellung eines dreidimensionalen Objekts gemäß einem Ausführungsbeispiel;
- Fig. 2 - 4: je eine vergrößerte Prinzipdarstellung der Einzelheit A der in Fig. 1 gezeigten Vorrichtung gemäß einem Ausführungsbeispiel; und
- Fig. 5: eine Prinzipdarstellung des Beschichterelements gemäß den in Fig. 2 gezeigten Ausführungsbeispiel.

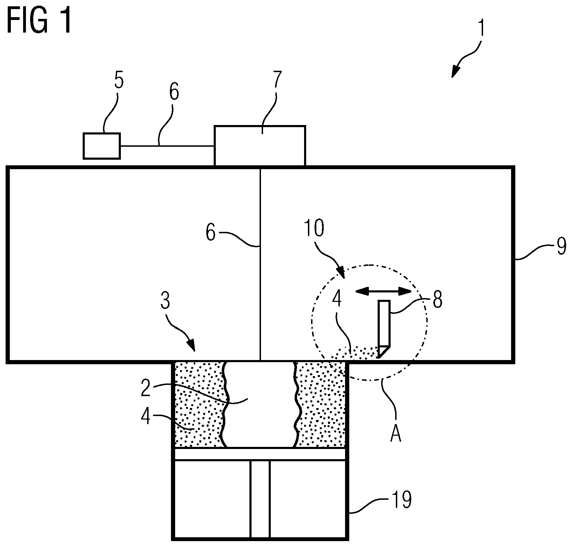

Fig. 1 zeigt eine Prinzipdarstellung einer Vorrichtung 1 zur additiven Herstellung dreidimensionaler Objekte 2 gemäß einem Ausführungsbeispiel gezeigt. Bei der Vorrichtung 1 kann es sich um eine SLM-Vorrichtung handeln.

Die Vorrichtung 1 dient der additiven Herstellung eines dreidimensionalen Objekts 2, d. h. typischerweise eines technischen Bauteils bzw. einer technischen Bauteilgruppe, durch selektives Verfestigen von in einer Bauebene 3 ausgebildeten Baumaterialschichten aus einem verfestigbaren partikulären Baumaterial 4 vermittels eines von einer Strahlungserzeugungseinrichtung 5 erzeugten Energie- bzw. Laserstrahls 6. Die Ausbildung und sukzessive selektive schichtweise Verfestigung der Baumaterialschichten erfolgt in einer Baukammer 9 der Vorrichtung 1. In der Baukammer 9 herrscht typischerweise eine Schutzgasatmosphäre, d. h. z. B. eine Argon- oder Stickstoffatmosphäre.

Bei dem Baumaterial 4 kann es sich um ein vermittels eines entsprechenden Energiestrahls 6 verfestigbares Metallpulver(gemisch), d. h. z. B. um ein Aluminiumpulver, und/oder um ein vermittels eines entsprechenden Energiestrahls 6 verfestigbares Kunststoffpulver(gemisch), d. h. z. B. um ein Polyetheretherketonpulver, und/oder um ein vermittels eines entsprechenden Energiestrahls 6 verfestigbares Keramikpulver(gemisch), d. h. z. B. um ein Aluminiumoxidpulver, handeln.

Die schichtweise selektive Verfestigung einer vermittels einer, wie durch den horizontal ausgerichteten Pfeil angedeutet, bewegbar gelagerten Beschichtereinrichtung 8 in der Bauebene 3 gebildeten, zu verfestigenden Baumaterialschicht erfolgt derart, dass der von der Strahlungserzeugungseinrichtung 5 erzeugte Energiestrahl 6, gegebenenfalls über eine Strahlablenkeinrichtung 7 bzw. Scannereinrichtung, selektiv auf bestimmte zu verfestigende, jeweiligen schichtbezogenen Querschnittsgeometrien des herzustellenden Objekts 2 entsprechende Bereiche der Baumaterialschicht gelenkt wird.

Die Vorrichtung 1 umfasst ferner wenigstens eine Fluidisierungseinrichtung 10. Die Fluidisierungseinrichtung 10 ist zur zumindest abschnittsweisen Fluidisierung des in einer selektiv zu verfestigenden Baumaterialschicht aufbringbaren Baumaterials 4 bzw. des (bereits) in einer selektiv zu verfestigenden Baumaterialschicht aufgebrachten Baumaterials 4 eingerichtet. Unter einer Fluidisierung ist insbesondere eine (lokale bzw. lokal begrenzte) Verwirbelung des Baumaterials 4 bzw. der Baumaterialpartikel zu verstehen, welche dem Baumaterial 4 fluid-ähnliche Eigenschaften verleiht Die Verwirbelung des Baumaterials 4 wirkt sich positiv auf die Aufzugs- bzw. Beschichtungseigenschaften respektive das Aufzugs- bzw. Beschichtungsverhalten des Baumaterials 4 aus. Die Fluidisierung des Baumaterials 4 kann eine (zeitweise) Aufhebung bzw. Schwächung der auf die Baumaterialpartikel einwirkenden Gravitationskräfte bedingen. Die Fluidisierung des Baumaterials 4 erfolgt (zeitlich) vor der selektiven Verfestigung des Baumaterials 4.

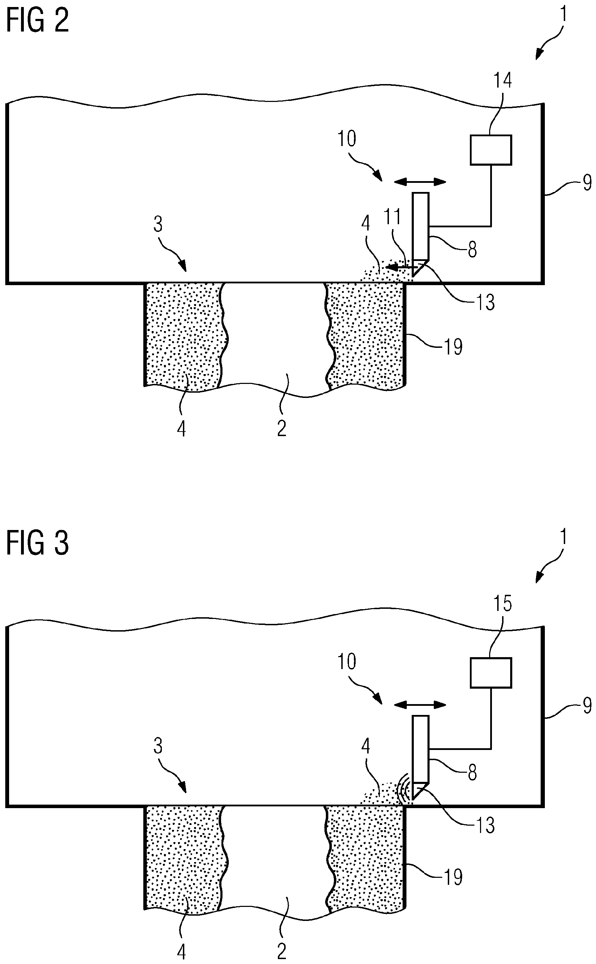

Fig. 2 zeigt eine vergrößerte Prinzipdarstellung der Einzelheit A der in Fig. 1 gezeigten Vorrichtung 1 gemäß einem weiteren Ausführungsbeispiel. In dem in Fig. 2 gezeigten Ausführungsbeispiel ist die Fluidisierungseinrichtung 10 eingerichtet, eine eine zumindest abschnittsweise Fluidisierung des Baumaterials 4 herbeiführende, durch die Pfeile 11 angedeutete Gasströmung zu erzeugen. Die Fluidisierung des Baumaterials 4 erfolgt hier durch eine seitens der Fluidisierungseinrichtung 10 erzeugte Gasströmung. Die Gasströmung ist sich parallel zu der Bauebene erstreckend ausgerichtet. Die Gasströmung ist im Hinblick auf ihre Strömungseigenschaften so gewählt, dass diese eine bereits gebildete Baumaterialschicht nicht beeinträchtigt. Die durch die Gasströmung erzeugte Verwirbelung bedingt typischerweise eine lokale bzw. lokal begrenzte Verwirbelung des Baumaterials 4. Die Gasströmung strömt mit einer (möglichst) laminaren Gasströmung und einer (möglichst) geringen Strömungsgeschwindigkeit.

Die Gasströmung ist durch ein inertes Strömungsgas (Inertgas) oder durch eine inerte Strömungsgasmischung gebildet. Das Strömungsgas bzw. die Strömungsgasmischung steht in keiner reaktiven Wechselwirkung mit dem Baumaterial 4. Das Strömungsgas kann z. B. Argon oder Stickstoff sein. Die Strömungsgasmischung kann z. B. Argon oder Stickstoff beinhalten.

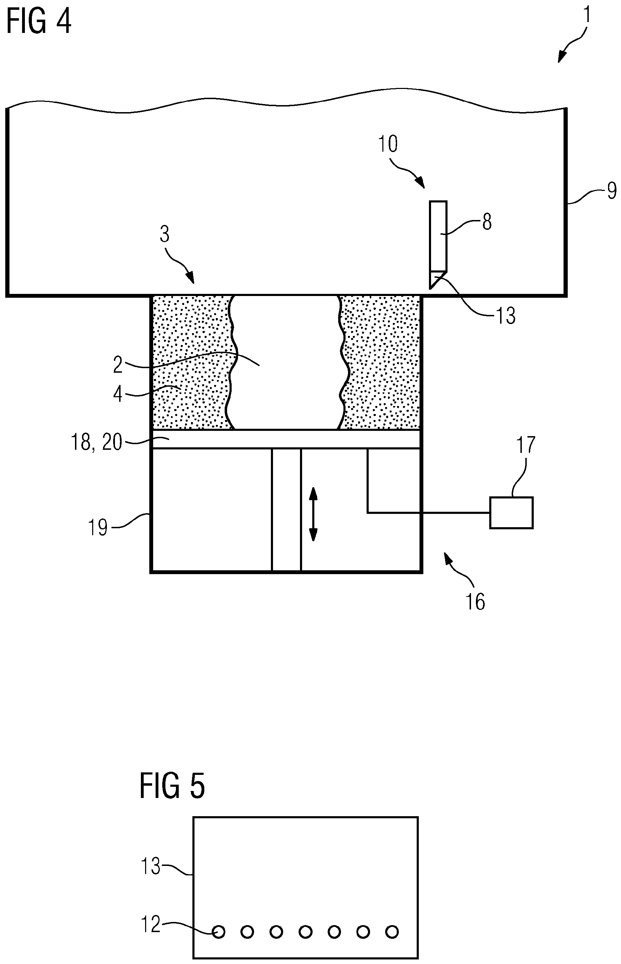

Die Gasströmung ist über eine in einer Funktionskomponente der Beschichtereinrichtung 8 ausgebildete, insbesondere diffusor- oder düsenartige, Strömungsöffnung(en) 12, vgl. Fig. 5, in das Baumaterial 4 einbringbar. Bei der Funktionskomponente handelt es sich um ein klingenartiges bzw. -förmiges Beschichterelement 13 (Beschichterklinge). Die Beschichtereinrichtung 8 bzw. das Beschichterelement 13 ist mit einer Strömungserzeugungseinrichtung 14 gekoppelt, über welche die Gasströmung in die Beschichtereinrichtung 8 bzw. in das Beschichterelement 13 einbringbar bzw. einleitbar ist.

Anhang von Fig. 5, welche eine Frontalansicht des Beschichterelements 13 zeigt, ist ersichtlich, dass die Strömungsöffnungen 12 so angeordnet und ausgerichtet sind, dass die Gasströmung, zumindest ihrer Hauptströmungsrichtung nach, (weitgehend) parallel zu der Bauebene 3 strömt. Anhand von Fig. 5 ist ferner ersichtlich, dass, sofern mehrere Strömungsöffnungen 12 vorhanden sind, diese in reihenartiger Anordnung, mithin nebeneinander, angeordnet sein können. Wenigstens eine Strömungsöffnung 12 kann mit einer die Strömungseigenschaften beeinflussenden, d. h. insbesondere verlangsamenden und/oder homogenisierenden, Geometrie, d. h. z. B. einer gitterartigen bzw. -förmigen Diffusor- bzw. Düsengeometrie, ausgebildet sein.

Zur Beeinflussung, d. h. insbesondere zur Verlangsamung bzw. Homogenisierung der Strömungseigenschaften der Gasströmung, kann wenigstens ein gesondertes, wenigstens einer Strömungsöffnung 12 funktionell zugeordnetes Diffusorelement (nicht gezeigt) vorhanden sein.

Fig. 3 zeigt eine vergrößerte Prinzipdarstellung der Einzelheit A der in Fig. 1 gezeigten Vorrichtung 1 gemäß einem weiteren Ausführungsbeispiel. In dem in Fig. 3 gezeigten Ausführungsbeispiel ist die Fluidisierungseinrichtung 10 eingerichtet, eine zumindest abschnittsweise Fluidisierung des Baumaterials 4 herbeiführende mechanische Schwingungen zu erzeugen. Die Fluidisierung des Baumaterials 4 erfolgt hier durch seitens der Fluidisierungseinrichtung 10 erzeugte mechanische Schwingungen (Vibrationen). Die erzeugten Schwingungen sind im Hinblick auf ihre Schwingungseigenschaften, d. h. insbesondere Amplitude und Frequenz, so gewählt, dass diese eine bereits gebildete Baumaterialschicht nicht beeinträchtigen. Die durch die mechanischen Schwingungen erzeugte Verwirbelung bedingt typischerweise eine lokale bzw. lokal begrenzte Verwirbelung des Baumaterials 4.

Bei den mechanischen Schwingungen handelt es sich um akustische Schwingungen, d. h. um Schall, insbesondere um Ultraschall. Die mechanischen Schwingungen können über das Beschichterelement 13 in das Baumaterial 4 eingebracht. Die mechanischen Schwingungen zur Fluidisierung des Baumaterials 4 werden also unmittelbar über das Beschichterelement 13 in eine Baumaterialschicht eingebracht werden. Das Beschichterelement 13 ist hierfür mit einer Schwingungserzeugungseinrichtung 16 gekoppelt, über welche entsprechende Schwingungen in das Beschichterelement 13 einbringbar sind.

Fig. 4 zeigt eine vergrößerte Prinzipdarstellung der Einzelheit A der in Fig. 1 gezeigten Vorrichtung 1 gemäß einem weiteren Ausführungsbeispiel. In dem in Fig. 4 gezeigten Ausführungsbeispiel ist zusätzlich zu der Fluidisierungseinrichtung 10 eine Schwingungseinrichtung 16 dargestellt, welche der Verdichtung der Baumaterialschicht dient. Die Schwingungseinrichtung 16 ist eingerichtet, zur zumindest abschnittsweisen Verdichtung einer Baumaterialschicht zumindest bereichsweise mechanische Schwingungen in die Baumaterialschicht einzubringen. Die über die insofern als auch Verdichtungseinrichtung zu bezeichnende bzw. zu erachtende Schwingungseinrichtung in die Baumaterialschicht eingebrachten mechanischen Schwingungen resultieren in einer zumindest abschnittsweisen (gegebenenfalls weiteren) Verdichtung der Baumaterialschicht.

Zur Erzeugung und Übertragung mechanischer Schwingungen umfasst die Schwingungseinrichtung ein Schwingungserzeugungselement 17 zur Erzeugung mechanischer Schwingungen mit wenigstens einer bestimmten Schwingungscharakteristik bzw. bestimmten Schwingungseigenschaften und ein Schwingungsübertragungselement 18 zur Übertragung erzeugter mechanischer Schwingungen an bzw. in eine Baumaterialschicht. Das Schwingungserzeugungselement 17 ist zur Erzeugung von Schall bzw. Ultraschall eingerichtet.

Bei dem Schwingungsübertragungselement 18 handelt es sich um die eine bodenseitige Begrenzung des Pulverkammervolumens des Pulver- bzw. Baumoduls 19 darstellende Trageinrichtung 20.

Vermittels der in den Fig. gezeigten Vorrichtung 1 lässt sich ein Verfahren zur additiven Herstellung eines dreidimensionalen Objekts 2 durch selektive Verfestigung einzelner Baumaterialschichten aus verfestigbarem partikulären Baumaterial 4 vermittels eines von einer Strahlungserzeugungseinrichtung 5 erzeugten Energiestrahls 6 implementieren. Das Verfahren, bei welches es sich insbesondere um ein SLM-Verfahren handeln kann, zeichnet sich insbesondere dadurch aus, dass das Baumaterial 4 vermittels einer Fluidisierungseinrichtung 10 zumindest abschnittsweise fluidisiert wird.

## Patentansprüche

1. Vorrichtung (1) zur additiven Herstellung wenigstens eines dreidimensionalen Objekts (2) durch sukzessive selektive Verfestigung einzelner Baumaterialschichten (3) aus verfestigbarem partikulären Baumaterial (4) vermittels eines von einer Strahlungserzeugungseinrichtung (5) erzeugten Energiestrahls (6), umfassend wenigstens eine Strahlungserzeugungseinrichtung (5) zur Erzeugung eines Energiestrahls (6) und wenigstens eine Beschichtereinrichtung (9) zur Ausbildung einer zu verfestigenden Baumaterialschicht in einer Bauebene (3), wobei wenigstens eine Fluidisierungseinrichtung (10) vorgesehen ist, welche zur zumindest abschnittsweisen Fluidisierung des als selektiv zu verfestigende Baumaterialschicht aufbringbaren Baumaterials (4) und/oder des als selektiv zu verfestigende Baumaterialschicht aufgebrachten Baumaterials (4) eingerichtet ist, wobei die wenigstens eine Fluidisierungseinrichtung (10) eingerichtet ist, eine eine zumindest abschnittsweise Fluidisierung des als selektiv zu verfestigende Baumaterialschicht aufbringbaren Baumaterials (4) und/oder des als selektiv zu verfestigende Baumaterialschicht aufgebrachten Baumaterials (4) herbeiführende Gasströmung zu erzeugen, **dadurch gekennzeichnet, dass** die Gasströmung sich parallel zu der Bauebene (3) erstreckend ausgerichtet ist, wobei die Gasströmung über wenigstens eine in einer Funktionskomponente der Beschichtereinrichtung (8), insbesondere in einem klingenartigen Beschichterelement (13), ausgebildete, insbesondere diffusor- oder düsenartige, Strömungsöffnung (12) in das Baumaterial (4) einbringbar ist, wobei die wenigstens eine Strömungsöffnung (12) in Bezug auf eine Außenfläche der Beschichtereinrichtung (8) so angeordnet und ausgerichtet ist, dass die Gasströmung aus der wenigstens einen Strömungsöffnung (12) aus der Beschichtereinrichtung (8) austritt und parallel zu der Bauebene (3) strömt.

2. Vorrichtung nach Anspruch 1, **dadurch gekennzeichnet, dass** die Gasströmung durch ein inertes Strömungsgas oder eine inerte Strömungsgasmischung gebildet ist.

3. Vorrichtung nach einem der vorangehenden Ansprüche, **dadurch gekennzeichnet, dass** der wenigstens einen Strömungsöffnung (12) wenigstens ein gesondertes Diffusorelement, welches zur Erzeugung einer laminaren Gasströmung eingerichtet ist, zugeordnet ist.

4. Vorrichtung nach einem der vorhergehenden Ansprüche, **dadurch gekennzeichnet, dass** die wenigstens eine Fluidisierungseinrichtung (10) eingerichtet ist, eine zumindest abschnittsweise Fluidisierung des als eine selektiv zu verfestigende Baumaterialschicht aufbringbaren Baumaterials (4) und/oder des als selektiv zu verfestigende Baumaterialschicht aufgebrachten Baumaterials (4) herbeiführende mechanische Schwingungen zu erzeugen.

5. Vorrichtung nach Anspruch 4, **dadurch gekennzeichnet, dass** die mechanischen Schwingungen über wenigstens ein an oder in einer Funktionskomponente der Beschichtereinrichtung (8) angeordnetes oder ausgebildetes Schwingungserzeugungselement in das Baumaterial (4) einbringbar ist.

6. Vorrichtung nach Anspruch 5, **dadurch gekennzeichnet, dass** das Schwingungserzeugungselement an oder in einem klingenartigen Beschichterelement (13) angeordnet oder ausgebildet ist.

7. Vorrichtung nach einem der vorhergehenden Ansprüche, **gekennzeichnet durch** wenigstens eine Schwingungseinrichtung (16), welche eingerichtet ist, in eine selektiv zu verfestigende Baumaterialschicht zumindest bereichsweise mechanische Schwingungen zur zumindest bereichsweisen Verdichtung der Baumaterialschicht einzubringen.

8. Vorrichtung nach Anspruch 7, **dadurch gekennzeichnet, dass** die Schwingungseinrichtung (16) wenigstens ein Schwingungserzeugungselement (17) zur Erzeugung mechanischer Schwingungen mit einer bestimmten Schwingungscharakteristik und wenigstens ein Schwingungsübertragungselement (18) zur Übertragung erzeugter mechanischer Schwingungen an eine Baumaterialschicht oder ein Übertragungsmedium umfasst.

9. Vorrichtung nach Anspruch 8, **dadurch gekennzeichnet, dass** wenigstens ein Schwingungsübertragungselement (18) die Baumaterialschicht zumindest während der Einbringung mechanischer Schwingungen in die Baumaterialschicht zumindest bereichsweise kontaktiert, sodass erzeugte mechanische Schwingungen unmittelbar über das Schwingungsübertragungselement (18) in die Baumaterialschicht einbringbar sind.

10. Vorrichtung nach Anspruch 8 oder 9, **dadurch gekennzeichnet, dass** wenigstens ein Schwingungsübertragungselement (18) die Baumaterialschicht zumindest während der Einbringung mechanischer Schwingungen in die Baumaterialschicht nicht kontaktiert, sodass erzeugte mechanische Schwingungen mittelbar über ein Übertragungsmedium in die Baumaterialschicht einbringbar sind.

11. Vorrichtung nach einem der Ansprüche 8 bis 10, **dadurch gekennzeichnet, dass** die Schwingungseinrichtung (16), insbesondere ein dieser zugehöriges Schwingungsübertragungselement (18) zur Übertragung erzeugter mechanischer Schwingungen, in wenigstens einem Bewegungsfreiheitsgrad bewegbar gelagert ist, wobei die Schwingungseinrichtung (16) mit der zumindest entlang einer Bauebene (3) bewegbar gelagerten Beschichtereinrichtung (8) bewegungsgekoppelt oder mit einem beweglich gelagerten Trageinrichtung (20) bewegungsgekoppelt, insbesondere an oder in der Trageinrichtung (20) angeordnet oder ausgebildet, ist.

12. Vorrichtung nach Anspruch 11, **dadurch gekennzeichnet, dass** die Schwingungseinrichtung (16) in wenigstens einem Bewegungsfreiheitsgrad bewegbar gelagert ist, wobei die Schwingungseinrichtung (16) mit einer in wenigstens einem Bewegungsfreiheitsgrad bewegbar gelagerten Halteeinrichtung bewegungsgekoppelt, insbesondere an oder in der Halteeinrichtung angeordnet oder ausgebildet, ist.

13. Vorrichtung nach Anspruch 10, **dadurch gekennzeichnet, dass** die Schwingungseinrichtung (16) nicht bewegbar gelagert ist, wobei die Schwingungseinrichtung (10) an einer nicht bewegbar gelagerten Halteeinrichtung oder an einer eine Pulverkammerwandung begrenzenden Wandung eines Pulvermoduls (19) angeordnet oder ausgebildet ist.

14. Verfahren zur additiven Herstellung eines dreidimensionalen Objekts (2) durch sukzessive selektive Verfestigung einzelner Baumaterialschichten aus verfestigbarem partikulären Baumaterial (4) vermittels eines von einer Strahlungserzeugungseinrichtung (5) erzeugten Energiestrahls (6) in einer Bauebene (3), wobei das als selektiv zu verfestigende Baumaterialschicht aufbringbare Baumaterial (4) und/oder das als selektiv zu verfestigende Baumaterialschicht aufgebrachte Baumaterial (4) vermittels einer Fluidisierungseinrichtung (10) zumindest abschnittsweise fluidisiert wird die wenigstens eine Fluidisierungseinrichtung (10) eingerichtet ist, eine eine zumindest abschnittsweise Fluidisierung des als selektiv zu verfestigende Baumaterialschicht aufbringbaren Baumaterials (4) und/oder des als selektiv zu verfestigende Baumaterialschicht aufgebrachten Baumaterials (4) herbeiführende Gasströmung zu erzeugen, **dadurch gekennzeichnet, dass** die Gasströmung sich parallel zu der Bauebene (3) erstreckend ausgerichtet erzeugt wird, wobei die Gasströmung über wenigstens eine in einer Funktionskomponente der Beschichtereinrichtung (8), insbesondere in einem klingenartigen Beschichterelement (13), ausgebildete, insbesondere diffusor- oder düsenartige, Strömungsöffnung (12) in das Baumaterial (4) eingebracht wird, wobei die wenigstens eine Strömungsöffnung (12) in Bezug auf eine Außenfläche der Beschichtereinrichtung (8) so angeordnet und ausgerichtet ist, dass die Gasströmung aus der wenigstens einen Strömungsöffnung (12) aus der Beschichtereinrichtung (8) austritt und parallel zu der Bauebene (3) strömt.

## Claims

1. Apparatus (1) for the additive manufacturing of at least one three-dimensional object (2) by layer-by-layer selective solidification of individual building material layers (3) of solidifiable particulate building material (4) by means of an energy beam (6) generated by an energy beam generating unit (5), comprising at least one energy beam generating unit (5) for generating an energy beam (6) and at least one coating unit (9) for forming a building material layer to be solidified on one building plane (3), wherein at least one fluidization unit (10) is provided, which is configured to at least fluidize the building material (4), which can be and/or is applied as a building material layer to be solidified layer-by-layer, by sections, wherein the at least one fluidization unit (10) is arranged to generate a gas flow inducing a fluidization of the building material (4), which can be or is applied as the building material layer to be solidified layer-by-layer, at least by sections, **characterized in that** the gas flow is aligned to extend parallel to the building plane (3), wherein the gas flow can be led in through at least one, in particular, diffusor-type or nozzle-type flow opening (12), which is formed in a functional component of the coating unit (8), in particular in a blade-type coating element (13), wherein the at least one flow opening (12) relative to an outer surface of the coating unit (8) is arranged and aligned in the manner that the gas flow exits the at least one flow opening (12) from the coating unit (8) and flows parallel to the building plane (3).

2. Apparatus according to claim 1, **characterized in that** the gas flow is formed by an inert flow gas or an inert flow gas mixture.

3. Apparatus according to one of the foregoing claims, **characterized in that** a separate diffusor element, which is arranged to generate a laminar gas flow is assigned to the at least one flow opening (12).

4. Device according to one of the foregoing claims, **characterized in that** the at least one fluidization unit (10) is configured to generate mechanical oscillations inducing a fluidization at least by sections of the building material (4), which can be applied and/or is applied as a building material layer to be solidified layer-by-layer.

5. Apparatus according to claim 4, **characterized in that**
the mechanical oscillations can be induced on the building material (4) through at least one oscillation generating element, which is arranged or formed on or in a functional component of the coating unit (8).

6. Apparatus according to claim 5, **characterized in that** the oscillation generating element is arranged or embodied in a blade-type coating element (13).

7. Apparatus according to one of the foregoing claims, **characterized by** at least one oscillation unit (16), which is arranged to induce mechanical oscillations at least zonally on a building material layer to be compacted layer-by-layer for the solidification of the building material layer at least zonally.

8. Apparatus according to claim 7, **characterized in that** the oscillation unit (16) comprises at least one oscillation generating element (17) to generate mechanical oscillations with certain oscillation characteristics and at least one oscillation transmission element (18) to transfer the generated mechanical oscillations to a building material layer or a transmission medium.

9. Apparatus according to claim 8, **characterized in that** at least one oscillation transmission element (18) contacts the building material layer at least zonally and at least during the induction of mechanical oscillations on the building material layer, so that the generated mechanical oscillations can be led directly into the building material layer through the oscillation transmission element (18).

10. Apparatus according to claims 8 or 9, **characterized in that** at least one oscillation transmission element (18) does not contact the building material layer, at least during the induction of mechanical oscillations on the building material layer, so that the generated mechanical oscillations can be led indirectly into the building material layer through the transmission element.

11. Apparatus according to one of the claims 8 to 10, **characterized in that** the oscillation unit (16), in particular an oscillation transmission element (18) is arranged to be movable at least by a degree of free adjustment movement, wherein the oscillation unit (16) is arranged or formed to be motion-coupled with the coating element (8), which is arranged to be movable at least along one building plane (3) or to be motion-coupled with a support unit (20) that is arranged to be movable, in particular on or in the support unit (20).

12. Apparatus according to claim 11, **characterized in that** the oscillation unit (16) is arranged in at least one degree of free movement, wherein the oscillation unit (16) is arranged or formed to be motion-coupled in a support device, which is arranged to be movable in at least one degree of free movement, in particular on or in the support device.

13. Apparatus according to claim 10, **characterized in that** the oscillation unit (16) is arranged to be unmovable, wherein the oscillation unit (10) is arranged or formed in a support device, which is arranged to be unmovable or on a wall of a powder module (19) confining a powder chamber wall.

14. Method for the additive manufacturing of at least one three-dimensional object (2) by layer-by-layer selective solidification of individual building material layers of solidifiable particulate building material (4) by means of an energy beam (6) generated by an energy beam generating unit (5) on a construction plane (3), wherein the building material (4), which can be applied and which is to be compacted and/or the building material (4), which is applied as the building material layer to be solidified layer-by-layer, is fluidized at least by sections by means of at least one fluidization unit (10) and the at least one fluidization unit (10) is provided to generate a gas flow inducing a fluidization of the building material (4), which can be or is applied to be solidified layer-by-layer, at least by sections, **characterized in that**
the gas flow is generated in an alignment parallel to the building plane (3), wherein the gas flow can be led in through at least one, in particular, diffusor-type or nozzle-type flow opening (12), which is formed in a functional component of the coating unit (8), in particular in a blade-type coating element (13), wherein the at least one flow opening (12) relative to an outer surface of the coating unit (8) is arranged and aligned in the manner that the gas flow exits the at least one flow opening (12) from the coating unit (8) and flows parallel to the building plane (3).

## Revendications

1. Appareil (1) de fabrication additive d'au moins un objet tridimensionnel (2) par solidification sélective successive de couches d'un matériau de construction (3) constituées d'un matériau de construction particulaire solidifiable (4) au moyen d'un rayon d'énergie (6) produit par un dispositif de production de rayonnement (5), comprenant au moins un dispositif de production de rayonnement (5) pour produire un rayon d'énergie (6) et au moins un dispositif de revêtement (9) pour former une couche de matériau de construction à solidifier en un niveau de construction (3), où au moins un dispositif de fluidification (10) est prévu, qui est conçu pour fluidiser au moins par endroits le matériau de construction (4) applicable comme couche de matériau de construction à solidifier sélectivement et/ou le matériau de construction (4) appliqué comme couche de matériau de construction à solidifier sélectivement, l'au moins un dispositif de fluidification (10) étant conçu pour créer un flux de gaz provoquant une fluidisation au moins par endroits du matériau de construction (4) applicable comme couche de matériau de construction à solidifier sélectivement et/ou du matériau de construction (4) appliqué comme couche de matériau de construction à solidifier sélectivement, **caractérisé en ce que** le flux de gaz est conçu parallèle au niveau de construction (3), le flux de gaz pouvant être apporté via au moins une ouverture d'écoulement (12) dans le matériau de construction (4) formée dans au moins un composant fonctionnel du dispositif de revêtement (8), en particulier dans un élément de revêtement de type lame (13), ouverture en particulier de type diffuseur ou buse, l'au moins une ouverture d'écoulement (12) étant conçue ou disposée sur une surface externe du dispositif de revêtement (8) de façon que le flux de gaz de l'au moins une ouverture d'écoulement (12) sorte du dispositif de revêtement (8) et s'écoule parallèlement au niveau de construction (3).

2. Appareil selon la revendication 1, **caractérisé en ce que** le flux de gaz est formé d'un gaz d'écoulement inerte ou d'un mélange de gaz d'écoulement inerte.

3. Appareil selon l'une des revendications précédentes, **caractérisé en ce qu'**à l'au moins une ouverture d'écoulement (12) doit être assigné au moins un élément diffuseur séparé conçu pour créer un flux de gaz laminaire.

4. Appareil selon l'une des revendications précédentes, **caractérisé**
**en ce que** l'au moins un dispositif de fluidification (10) est conçu pour créer des vibrations mécaniques générant une fluidisation au moins par endroits du matériau de construction (4) applicable comme couche de matériau de construction à solidifier sélectivement et/ou du matériau de construction (4) appliqué comme couche de matériau de construction à solidifier sélectivement.

5. Appareil selon la revendication 4, **caractérisé en ce que** les
vibrations mécaniques peuvent être appliquées via au moins un élément de génération de vibrations dans le matériau de construction (4) conçu ou disposé sur ou dans un composant fonctionnel du dispositif de revêtement (8).

6. Appareil selon la revendication 5, **caractérisé en ce que** l'élément de génération de vibrations est conçu ou disposé sur ou dans un élément de revêtement de type lame (13).

7. Dispositif selon l'une quelconque des revendications précédentes, **caractérisé par** au moins un dispositif de vibration (16) conçu pour appliquer des vibrations mécaniques au moins par endroits dans une couche de matériau de construction à solidifier sélectivement pour densifier au moins par endroits la couche de matériau de construction.

8. Appareil selon la revendication 7, **caractérisé en ce que** le dispositif de vibration (16) comprend au moins un élément de génération de vibrations (17) pour générer des vibrations mécaniques avec une caractéristique vibratoire déterminée et au moins un élément de transfert de vibrations (18) pour transférer les vibrations mécaniques générées à une couche de matériau de construction ou à un milieu de transfert.

9. Appareil selon la revendication 8, **caractérisé en ce qu'**au moins un élément de transfert de vibrations (18) est en contact avec la couche de matériau de construction pendant l'application de vibrations mécaniques à la couche de matériau de construction au moins par endroits, de sorte que des vibrations mécaniques générées puissent être appliquées directement via l'élément de transfert de vibrations (18) dans la couche de matériau de construction.

10. Appareil selon la revendication 8 ou 9, **caractérisé en ce qu'**au moins un élément de transfert de vibrations (18) n'est pas en contact avec la couche de matériau de construction pendant l'application de vibrations mécaniques à la couche de matériau de construction, de sorte que des vibrations mécaniques générées puissent être appliquées indirectement via un milieu de transfert dans la couche de matériau de construction.

11. Appareil selon l'une des revendications 8 à 10, **caractérisé en ce que** le dispositif de vibration (16), en particulier un élément de transfert de vibrations (18) d'un tel dispositif destiné à transférer des vibrations mécaniques générées, est mobile avec au moins un degré de liberté de mouvement, le dispositif de vibration (16) étant conçu ou disposé couplé en déplacement avec le dispositif de revêtement (8) mobile le long d'un niveau de construction (3) ou avec un dispositif porteur (20) mobile, en particulier dans ou contre le dispositif porteur (20).

12. Appareil selon la revendication 11, **caractérisé en ce que** le dispositif de vibration (16) est disposé mobile avec au moins un degré de liberté de mouvement, le dispositif de vibration (16) étant conçu ou disposé couplé en déplacement avec un dispositif de retenue mobile avec au moins un degré de liberté de mouvement, en particulier conçu ou disposé dans ou contre le dispositif de retenue.

13. Appareil selon la revendication 10, **caractérisé en ce que** le dispositif de vibration (16) n'est pas mobile, le dispositif de vibration (10) étant conçu ou disposé contre un dispositif de retenue non mobile ou contre une paroi de chambre de poudre d'un module de poudre (19).

14. Procédé de fabrication additive d'au moins un objet tridimensionnel (2) par solidification sélective successive de couches d'un matériau de construction constitué d'un matériau de construction particulaire solidifiable (4) au moyen d'un rayon d'énergie (6) produit par un dispositif de production de rayonnement (5) sur un niveau de construction (3), le matériau de construction (4) applicable comme couche de matériau de construction à solidifier sélectivement et/ou le matériau de construction (4) appliqué comme couche de matériau de construction à solidifier sélectivement étant fluidisé au moyen d'un dispositif de fluidification (10) au moins par endroits, l'au moins un dispositif de fluidification (10) étant conçu pour créer un flux de gaz provoquant une fluidisation au moins par endroits du matériau de construction (4) applicable comme couche de matériau de construction à solidifier sélectivement et/ou du matériau de construction (4) appliqué comme couche de matériau de construction à solidifier sélectivement, **caractérisé en ce que** le flux de gaz est conçu parallèle au niveau de construction (3), le flux de gaz pouvant être apporté via au moins une ouverture d'écoulement (12) dans le matériau de construction (4) formée dans au moins un composant fonctionnel du dispositif de revêtement (8), en particulier dans un élément de revêtement de type lame (13), ouverture en particulier de type diffuseur ou buse, l'au moins une ouverture d'écoulement (12) étant conçue ou disposée sur une surface externe du dispositif de revêtement (8) de façon que le flux de gaz de l'au moins une ouverture d'écoulement (12) sorte du dispositif de revêtement (8) et s'écoule parallèlement au niveau de construction (3).
